# EUROPEAN PATENT SPECIFICATION

(11) **EP 4 532 146 B1**
(45) Date of publication and mention of the grant of the patent: **02.09.2026**
(21) Application number: 22943068.1
(22) Date of filing: 24.05.2022
(51) Int. Cl.: B25J 9/16, D05B 47/04

(54) **ROBOT AND METHOD FOR ADJUSTING SEWN THREADS**
ROBOTER UND VERFAHREN ZUR EINSTELLUNG GENÄHTER FÄDEN
ROBOT ET PROCÉDÉ DE RÉGLAGE DE FILS COUSUS

(43) Date of publication of application: 09.04.2025
(73) Proprietor: ABB SCHWEIZ AG, 5400 Baden (CH)
(72) Inventor: DONG, Yiming, Shanghai 201101 (CN)
(74) Representative: Zimmermann & Partner Patentanwälte mbB
(86) International application number: PCT/CN2022/094755
(87) International publication number: WO 2023/225862

(56) References cited:
- WO-A1-2018/044176
- CN-A- 105 599 695
- CN-A- 113 430 727
- CN-U- 207 738 961
- DE-A1- 102007 019 521
- JP-A- 2018 046 894
- US-A- 2 514 662

## Description

### FIELD

Embodiments of the present disclosure generally relate to a field of industrial robots, and more particularly to industrial robots for sewing an object.

### BACKGROUND

In automobile industries, more and more cars are manufactured to equip with a leather covered steering wheel. The leather not only improves an outer appearance of the steering wheel but also improve comforts of hand feeling. That is because the leather cover can resist slippery caused by sweat, which means safer drive.

Typically, a leather cover is manually fixed to a blank steering wheel by a manual work. A worker firstly fixes the leather cover to the blank steering wheel by gluing and then sews the leather cover to the blank steering wheel stitch by stitch. This is labor intensive and time-consuming. For a single steering wheel, to complete this assembly process, it takes up to one hour even for an experienced operator. There is an increasing need to automate the assembly process by industrial robots. US patent application US 2 514 662 A relates to a seam ripping device, and to an attachment for sewing machines by which the threads of a stitched seam may be exposed and progressively cut as material containing the seam is advanced under the presser foot of the sewing machine. German patent application DE 10 2007 019521 A1 describes a device for covering an object, in particular for covering a vehicle steering wheel, including a receptacle for holding the object, at least two sewing heads movable relative to the receptacle, at least one support for a cover, a needle and a control. The first sewing head is controlled so that it pierces the needle through the cover located on the support. The second sewing head is controlled in such a way that it receives the needle that has pierced through the cover. A method for covering an object, in particular for covering a vehicle steering wheel with leather, with a sewing device is also described in document DE 10 2007 019521 A1.

### SUMMARY

Example embodiments of the present disclosure provide a robot and a method for adjusting sewn threads which can enhance joints strength of the sewn seams.

In a first aspect of the present disclosure, it is provided a robot for adjusting sewn threads. The robot comprises: a robotic arm configured to hold an adjusting tool, and a controller configured to: cause the adjusting tool to partially go across a thread section along a path defined between a bottom side of the thread section and an outer surface of an object, wherein the sewn threads comprises a first end fixed to the object and a second end, a plural of stitches are formed across a sewing zone on the object between the first end and the second end, and each stitch comprises the thread section including a top side and the opposite bottom side; and move the adjusting tool upward away from the outer surface so as to adjust pitches between the stitches.

According to the present disclosure, pitches of the adjacent sewn stitches are adjusted. Joining strength of the seam joint formed by the stitches can be improved. Also, outer appearance of the sewn product is improved.

In some embodiments, the controller may be configured to: determine an adjustment position which corresponds to a thread section of the stitches to be adjusted; move the adjusting tool to a ready position at a first lateral side of the thread section which is offset from the position to be sewed by an offset distance; and move the adjusting tool a first distance from the first lateral side of the thread section to a second opposite lateral side of the thread section to cause tool to go across the thread section, the first distance being larger than the offset distance. With the arrangement, there are reduced scratches during the adjustment operation.

In some embodiments, the robot may further comprise a camera for capturing images of the object, wherein the adjustment position is determined based on the captured images. With the arrangement, the adjustment position can be determined easily.

In some embodiments, the controller may be configured to: depress the adjusting tool in a direction perpendicular to the outer surface at the ready position toward the outer surface so as to deform the outer surface of the object. With the arrangement, there are no scratches during the adjustment operation.

In some embodiments, the controller may be configured to linearly move the adjusting tool the first distance from the first lateral side of the thread section to the second opposite lateral side of the thread section, with the adjusting tool being maintained at the depressed state. By the linear movement of the adjusting tool, the adjusting tool goes through the thread section from a bottom side without barrier.

In some embodiments, the robot may further comprise a force sensor attached to the robotic arm for sensing a contact force between the adjusting tool and the object, wherein the depressing degree is determined based on the sensed contact force, the depressing degree being determined in association with a material of the object. With the arrangement, contact force can be controlled easily.

In some embodiments, the adjusting tool may comprise a pick-up head for penetrating the stitch and a curved portion adjacent to the pick-up head for holding the thread. With the arrangement, the pick-up head can easily pick up the thread and hold the thread.

In some embodiments, the controller may be configured to: adjust the posture of the adjusting tool to hold the thread section at the curved portion after the adjusting tool partially going across the thread section; move the adjusting tool upward away from the outer surface a second distance, with the thread section held at the curved portion; and stop moving the adjusting tool in response to meeting a requirement. With the arrangement, the accidental fall off of the thread can be avoided.

In some embodiments, the robot may further comprise a force sensor attached to the robotic arm for sensing a force acting upon the adjusting tool, wherein the controller is configured to stop moving the adjusting tool in response to the force acting upon the adjusting tool being equal to a predetermined threshold, the predetermined threshold being determined in association with a seam pattern of the sewn threads. With the arrangement, the pitches are regularly adjusted and the appearance of the seam can be further improved.

In some embodiments, the object comprises a cover pre-wrapped around a steering wheel, the cover being made of leather, leatherette, or fabric.

In a second aspect of the present disclosure, it is provided a method for adjusting sewn threads. The method comprises: hold an adjusting tool by a robotic arm; cause the adjusting tool to partially go across a thread section along a path defined between a bottom side of the thread section and an outer surface of an object, wherein the sewn threads comprises a first end fixed to the object and a second end, a plural of stitches are formed across a sewing zone on the object between the first end and the second end, and each stitch comprises the thread section including a top side and the opposite bottom side; and move the adjusting tool upward away from the outer surface so as to adjust pitches between the stitches.

In some embodiments, the method may further comprise: determining, by the controller, an adjustment position which corresponds to a thread section of the stitches to be adjusted; moving, by the controller, the adjusting tool to a ready position at a first lateral side of the thread section which is offset from the position to be sewed by an offset distance; and moving, by the controller, the adjusting tool a first distance from the first lateral side of the thread section to a second opposite lateral side of the thread section with the adjusting tool to cause tool to go across the thread section, the first distance being larger than the offset distance.

In some embodiments, the method may further comprise determining the adjustment position and the tangent angle that the line is tangent to the outer surface are determined based on the captured images captured by a camera.

In some embodiments, the method may further comprise depressing the adjusting tool in a direction perpendicular to the outer surface at the ready position toward the outer surface so as to deform the outer surface of the object, the depressing degree being determined based on a sensed contact force by a force sensor attached to the robotic arm.

In some embodiments, the method may further comprise: adjusting the posture of the adjusting tool to hold the thread section at a curved portion after the adjusting tool partially going across the thread section; moving the adjusting tool upward away from the outer surface, with the thread section held at the curved portion; and stop moving the adjusting tool in response to a force acting upon the adjusting tool being equal to a predetermined threshold, the predetermined threshold being determined in association with a seam pattern of the sewn threads.

In some embodiments, the object comprises a cover pre-wrapped around a steering wheel, the cover being made of leather, leatherette, or fabric.

### DESCRIPTION OF DRAWINGS

Through the following detailed descriptions with reference to the accompanying drawings, the above and other objectives, features and advantages of the example embodiments disclosed herein will become more comprehensible. In the drawings, several example embodiments disclosed herein will be illustrated in an example and in a non-limiting manner, wherein:
Fig. 1 is a schematic view of a robot for sewing an object according to one example embodiment of the present disclosure;
Fig. 2 is a schematic view of a robot for adjusting sewn threads according to another example embodiment of the present disclosure;
Fig. 3 is a schematic perspective view showing a state that sewn stitches are adjusted by an adjusting tool according to one example embodiment of the present disclosure;
Fig. 4 is a schematic perspective view of a portion of a robot for sewing an object according to one example embodiment of the present disclosure, showing a position relationship between a tool prepared for adjusting the sewn threads and the object;
Figs. 5-10 are schematic sectional views illustrating a principle of how a tool is operated to adjust sewn threads according to one example embodiment of the present disclosure, showing different states of the adjusting tool with respect to the sewn threads;
Fig. 11 is a flow chart of a method for adjusting sewn threads according to one example embodiment of the present disclosure.

Throughout the drawings, the same or similar reference symbols are used to indicate the same or similar elements.

### DETAILED DESCRIPTION OF EMBODIMENTS

Principles of the present disclosure will now be described with reference to several example embodiments shown in the drawings. Though example embodiments of the present disclosure are illustrated in the drawings, it is to be understood that the embodiments are described only to facilitate those skilled in the art in better understanding and thereby achieving the present disclosure, rather than to limit the scope of the disclosure in any manner.

The term "comprises" or "includes" and its variants are to be read as open terms that mean "includes, but is not limited to." The term "or" is to be read as "and/or" unless the context clearly indicates otherwise. The term "based on" is to be read as "based at least in part on." The term "being operable to" is to mean a function, an action, a motion or a state that can be achieved by an operation induced by a user or an external mechanism. The term "one embodiment" and "an embodiment" are to be read as "at least one embodiment." The term "another embodiment" is to be read as "at least one other embodiment." The terms "first," "second," and the like may refer to different or same objects. Other definitions, explicit and implicit, may be included below. A definition of a term is consistent throughout the description unless the context clearly indicates otherwise.

There is an increasing need to automate an assembly process for sewing a cover to a steering wheel. The present invention proposes a novel robot system for sewing which can sew a cover to onto a steering wheel. It is to be understood that although the present disclosure takes a steering wheel with a cover as an example to illustrate principles of the present invention, this is merely illustrative, and the inventive concepts are applicable to any other objects that needs to be sewn.

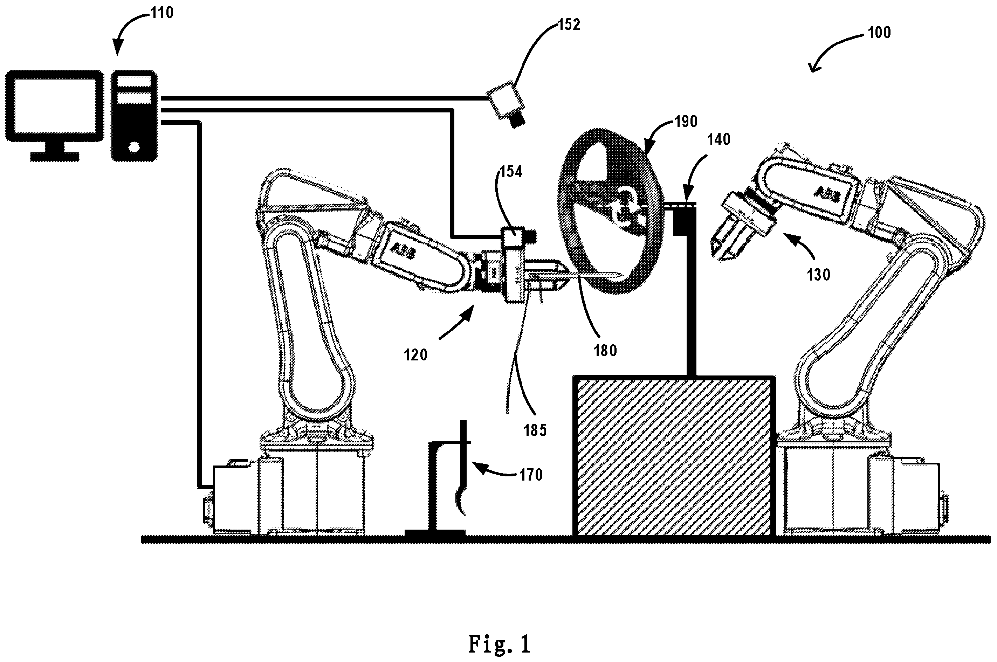

Fig. 1 shows a robot system 100 for sewing an object. As shown in Fig. 1, the robot system 100 comprises a support 140 for supporting the object to be sewed (in the shown example, a steering wheel 190, a first robotic arm 120, and a second robotic arm 130. The object may be a semi-finished product transferred from a previous process and may comprise a cover and a blank steering wheel. The cover may be primarily glued to the blank steering wheel and the cover should be further sewed according to a predetermined sewing pattern so as to tightly fix the cover onto the blank steering wheel. The robot system 100 is configured to perform the above sewing operations.

The robot system 100 further comprises a controller 110 and the controller 110 can communicate with the first robotic arm 120 and the second robotic arm 130 to control their movements so as to perform sewing operations.

The robot system 100 may further comprise one or more cameras 152, 154. The cameras 152 and 154 may be attached to different positions of the robot system so as to obtain images of the object from different perspectives. The images of the object can be sent to the controller 110. In some embodiments, the controller is configured to visually inspect the object based on the image from the cameras and to provide an inspection result indicating a suitability of whether the object can be sewed by the apparatus before the sewing operation. In some embodiments, a sewing quality after the sewing operation can be provided. In some embodiments the controller 110 is configured to identify a plural of positions to be sewed based on the image from the cameras and to generate a sewing path. The sewing path determines a sewing pattern which defines the positions to be sewed in order according to an input rule of lacing pattern based on the identified plural of positions to be sewed. According to the sewing path, the controller controls the first robotic arm 120 and the second robotic arm 130 so as to perform sewing operations. Through the plural of sewing operations, a plural of stitches are automatically formed.

The first robotic arm 120 and the second robotic arm 130 are arranged adjacent to the support 140 and thus can access the steering wheel 190 to perform sewing operations. The first robotic arm 120 and the second robotic arm 130 each comprise a gripper configured to hold the needle 180. The support 140 may comprise a shaft which is rotatable so that positions of the steering wheel 190 can be adjusted according to positions to be sewn of the steering wheel 190.

The sewing operations of the robot system 100 are illustrated as below. The first robotic arm 120 firstly holds the needle 180 and the needle 180 is tied with a length of a thread. The second robotic arm 130 is at a standby position. The controller 110 identifies a position to be sewed and instructs the first robotic arm 120 to move to the identified position to be sewed to cause the needle 180 to penetrate a part of the steering wheel 190. Then, the controller 110 instructs the second robotic arm 130 to hold a penetration portion of the needle 180 and pull the whole needle 180 out of the steering wheel 190 after the needle 180 being released by the first robotic arm 120.

Through the above process, the needle 180 is penetrated into the object and the needle 180 is further pulled out of the object by the robot system 100. Thus, a sewn stitch is formed on the object. The above processes are repeated a numeral of times. A plural of stitches are formed on the object.

Although the stitches are formed on the object, the stitch is loosely arranged. This means pitches of the sewn stitches are not satisfying and the joints formed by the stitch are loose. Accordingly, further actions should be taken to tension the sewn threads so as to form a firm joint in a sewing zone.

Typically, the cover for wrapping the steering wheel is made of leather, leatherette, fabric and the like. The sewn threads generally are close to an outer surface of the object. Then, one problem is how to tension the sewn thread by a robot. Also, due to the fact that the cover is generally soft and has a certain flexibility to improve hand manipulation sense, another problem is how to tension the sewn threads without scratching the outer surface of the cover.

A process for adjusting a sewn thread thus requires that a tool has to penetrate a sewn thread without scratching. The present disclosure provides a novel robot for robot for adjusting sewn threads which is capable of adjusting sewn threads on an object made of flexible material free of risks of scratches.

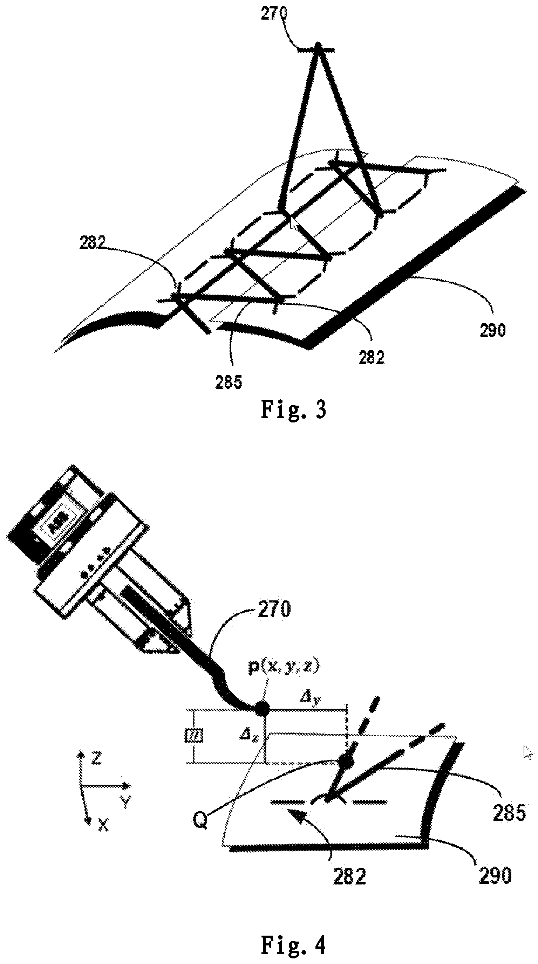

As shown in Fig. 1, also referring to Fig.3, the robot system 100 may further comprise an adjusting tool 170 which is configured to adjust pitches of the sewn stitches. The adjusting tool 170 may comprise a pick-up head which is configured to pick up a thread section of the sewn stitches and then are moved by a robotic arm so as to apply tensioning forces on the sewn stitches. Due to the tensioning forces on the sewn stitches, the adjacent stitches are getting closer to each other, i.e., pitches of the adjacent sewn stitches are adjusted. In this way, joining strength of the seam joint formed by the stitches can be improved. Also, outer appearance of the sewn product is improved.

In the shown example embodiment, the adjusting tool 170 is placed close to the robotic arm 120 and is exchangeable with the needle 180 carried by the robotic arm 120. When the adjustment operation is needed, the needle 180 carried by the robotic arm 120 may be replaced by the adjusting tool 170 so as to perform adjusting operations. This is merely illustrative. In some embodiments, a third robotic arm is provided adjacent to the object and can perform the adjustment operation when necessary.

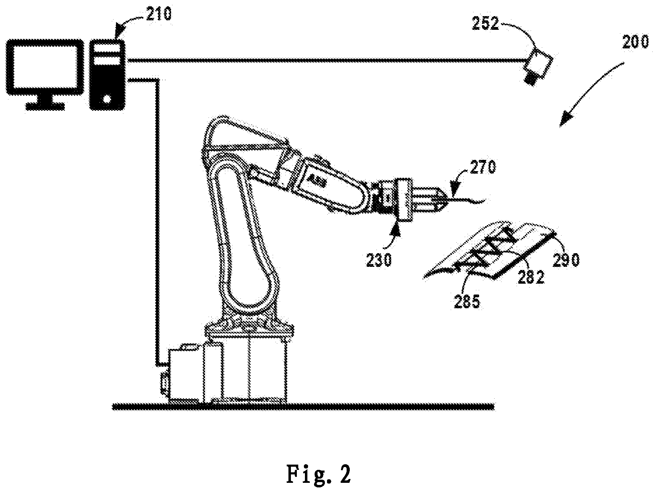

Fig. 2 shows a robot system 200 for adjusting sewn stitches 285. As shown in Fig. 2, the robot system 200 comprises a robotic arm 230 and a controller 210. An object 290 to be sewed, for example, a leather cover, can be placed at a proper position which can be accessed by the robotic arm 220. The controller 210 can communicate with the robotic arm 220 to control its movements so as to perform sewing operations. The robotic arm 220 may comprise a gripper for holding an adjusting tool 270. As shown in Fig.2 a number of sewn stitches are formed on the object 290 via the robot system.

The adjusting tool 270 is configured to perform the adjusting operations. The adjusting tool 270 is of a shape that can hold a thread. In some embodiments, the adjusting tool 270 comprises a pick-up head. The pick-up head is shaped to pick up a thread. The pick-up head may comprise a thin needle head. The thin needle head is very sharp and thin and can easily penetrate a thread. This is advantageous when the adjusting tool 270 penetrates a sewn stitch. When the adjusting tool 270 hold the thread and moves upward, the thread remains static with respect to the adjusting tool 270, and the thread thus are tensioned. By the tensioning force, the pitches of the sewn threads are adjusted accordingly. The adjusting tool 270 may be of proper material to form a static friction force with respect to the thread so as to be applied upon the threads. In some embodiments, the adjusting tool 270 is made of metal. The thread may be made of chemical fiber, cotton, or any other commonly used material.

In some embodiments, the adjusting tool 270 may comprise a concave curved portion adjacent to the thin needle head. The concave curved portion may be formed as a part of the pick-up head. The concave curved portion is configured to hold the thread firmly. Once the pick-up head picks up the thread, the thread can slightly moves along a curvature of the concave curved portion and can thus be firmly held at the held at the concave curved portion.

The pick-up head is provided with a thin needle which is so thin that the pick-up head can easily pick up and hold the sewn thread. In the shown example, the curved portion may be formed as a concave portion for holding the thread. It is to be understood that the shape the adjusting tool 270 is merely illustrative and the adjusting tool 270 may be formed with any other proper shapes according to the teaching of the present disclosure.

Fig. 3 shows a schematic perspective view of the sewn stitches 285 by the robot system for sewing an object according to one example embodiment of the present disclosure. As shown in Fig.3, two rows of pre-stitches 282 are formed on the outer surface of the object 290 in advance and the two rows of pre-stitches 282 form a sewing zone of the object. Each of the pre-stitches includes a thread section. The sewn stitches 285 are formed by moving the thread for swing across the thread section of the pre-stitches 282 along a path defined between the thread section and the outer surface of the object 290. In the shown example, each of the sewn stitches 285 comprises a portion penetrating a pre-stitch 282 in one row and a portion penetrating a pre-stitch 282 in the other row. The sewn stitch 285 thus joins the two rows of pre-stitches 282. In this way, the cover can be sewn on the black steering wheel.

In the shown example in Fig. 3, the two rows of the pre-stitches 282 are provided on the edge of the cover and the two edges meet to form the joint. The sewn stitches 285 are shown as extending across a gap between the two rows of the pre-stitches 282. This is merely illustrative rather than limited. The cover and the pre-stitches 282 can be of any proper forms. For example, in some embodiments, there are no pre-stitches 282 formed on the cover and there are a plural of holes formed on the cover. The sewn threads 285 may comprise a first end fixed to the object and a second end. The second end may be a free end. In some embodiments, the second end may be fixed or movable. A plural of stitches are formed across a sewing zone on the object between the first end and the second end, and each stitch comprises the thread section including a top side and the opposite bottom side.

It is to be understood that the shown sewn pattern is merely illustrative and the sewn pattern may be of any other proper forms as long as the cover can be sewn on the black steering wheel. In the shown example, two rows of pre-stitches 282 are formed in advance on the object and the two rows of pre-stitches 282 are used to penetrate the thread 285 so as to sew the cover to the black steering wheel. It is to be understood that this is merely illustrative, instead of the pre-stitches 282, other measures, such as holes, may be formed for facilitate sewing.

Referring back to Fig. 2, the robot system 200 may further comprise one or more camera 252. The camera 252 may be attached to a proper position of the robot system and is configured to obtain images of the object. The images of the object can be sent to the controller 210. The controller 210 is configured to identify a plural of stitches to be tensioned, i.e., a plural of thread sections of the sewn threads 285, based on the images from the cameras. After the adjusting tool 270 passes each of the selected stitches to be adjusted from a bottom side, the adjusting tool 270 can be pulled upward so as to apply tensions onto the sewn threads 285. The sewn threads 285, in particular the adjacent sewn threads, are tensioned with the pulling force. Through the tensioning operations, the sewn threads 285 can be tightened and a firm sewing joint thus is formed by.

Fig. 4 is a schematic perspective view of a portion of a robot for sewing an object according to one example embodiment of the present disclosure, showing a position relationship between a tool prepared for adjusting the sewn threads and the object;

Fig. 4 is a schematic enlarged perspective view of Fig.3 and shows a position relationship between an adjusting tool 270 held by a robotic arm 220 and the object 290 to be sewn. As shown in Fig. 4, the object 290 comprises a flexible outer surface 292. The flexible outer surface 292 may be provided with pre-stitches 282. The sewn stitch 285 is formed by penetrating the pre-stitches 282.

As shown in Fig. 4, the adjusting tool 270 is held by the robotic arm 220 and can be moved by the robotic arm 220. The object 290 is provided with a number of thread sections of sewn threads 285. The position of the adjusting tool 270 is represented by P (x, y, z), where x, y, z represents the coordinates in the coordinate system, the x-y plane represents a horizontal plane that a position Q to be tightened (which corresponds to a thread section of the sewn threads 285) is located on the object 290, and the z axis represents a direction perpendicular to the x-y plane. It is to be understood the P (x, y, z) is merely illustrative and the position of the adjusting tool 270 can be represented by any other proper coordinate system. In Fig. 4, a coordinate of the adjusting tool 270 is located is at a position P(x, y, z) and is offset by Δx, Δy, Δz with respect to the position Q. The controller can use these parameters to control the robotic arm 220 to move the adjusting tool 270, in particular, the adjusting tool 270, to a proper position to perform tensioning operations.

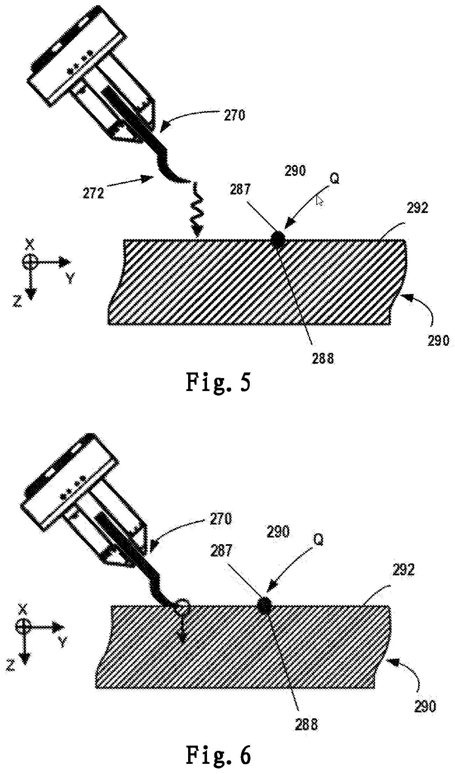

Figs. 5-10 are schematic sectional process views illustrating principles of how an adjusting tool 270 is operated to perform adjusting operations according to one example embodiment of the present disclosure, showing different states of the adjusting tool 270 with respect to the position Q to be adjusted. Figs. 5-10 are similar to Fig. 4 but shows a plane view of y-z plane in which the relative position between the adjusting tool 270 so as to better shown their position relationship.

In Fig. 5, the adjusting tool 270 is at an offset position before the adjusting operation. As shown in Fig. 5, also referring to Fig. 4, the object 290 includes a flexible outer surface 292 and a plural of sewn thread sections (shown as a black circle dot in Fig. 5) formed on or above the outer surface 292.

The sewn thread sections each includes a thread section 285 including a top side 287 and an opposite bottom side 288 facing the outer surface 292. In order to ensure that there is no scratching, the adjusting tool 270 is controlled to go across the thread section 285 along a path defined between the bottom side 288 of the thread section 285 and the outer surface 292of the object 290.

Assuming that the adjusting tool 270 is to pass the thread section 285 from a position which is denoted by the position Q in Fig. 5. The position Q is firstly determined, for example by the camera 252. The positon P of the adjusting tool 270 is also known by the robot. Thus, relative relationship between the adjusting tool 270 and the position Q is known by the controller.

Once the above parameters are determined, the robotic arm 220 is lowered onto the object 290 and moves the adjusting tool 270 a first distance from the first lateral side of the thread section 285 to a second opposite lateral side of the thread section with the adjusting tool 270 to cause the adjusting tool 270 to go across the thread section. In this way, the adjusting tool 270 can pass the thread section 285 from the bottom side with less or without scratches. In some embodiments, the first distance is larger than the offset distance. This ensures that the adjusting tool 270 does pass the thread section 285 from the bottom side.

The adjusting tool 270 comprises a pick-up head which is shaped to pick up the thread once the adjusting tool 270 passes the thread section 285 from the bottom side. In some embodiments, the pick-up head is provided with a thin needle which is so thin that the pick-up head can easily pick up and hold the sewn thread.

In some embodiments, as shown in Fig. 6, the adjusting tool 270 is further depressed in a direction perpendicular to the outer surface 292 at the ready position toward the outer surface 292 so as to deform the outer surface 292 of the object. In some embodiments, the pick-up head may further comprise a straight portion which is adjacent to the thin needle. By this straight portion, contact force that the adjusting tool 270 acts on the outer surface 292 can be stabilized. It is to be understood that this is merely illustrative.

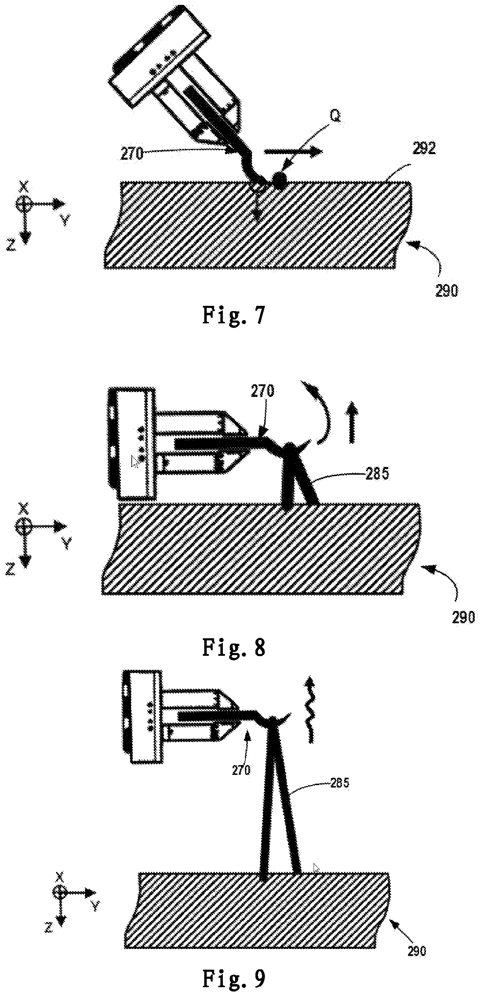

In some embodiments, as shown in Fig. 7, when the adjusting tool 270 is depressed in a direction perpendicular to the outer surface 292 toward the outer surface 292, the adjusting tool 270, at least its pick-up head, can go through the bottom side 288 of the thread section 285 and the outer surface 292 of the object 290 without barrier.

By deforming the outer surface 292 of the object, the scratches caused by the adjusting tool 270 can be completely obviated. It is to be understood that this is merely illustrative rather than limited. In some embodiments, the step of depressing the adjusting tool 270 can be omitted. For example, when a slight gap is initially formed between the thread section of the sewn thread and the outer surface 292 of the object and the adjusting tool 270 can go through this slight gap, it may not be necessary to depress the adjusting tool 270.

In some embodiments, the robot may further comprise a force sensor attached to the robotic arm. The force sensor is configured to sense a contact force between the adjusting tool 270 and the object. In this way, the depressing degree is determined based on the sensed contact force. In some embodiments, the depressing degree is determined in association with a material property of the object, for example, a hardness of the cover. With the force sensor, the force for deforming the outer surface 292 of the object can be precisely controlled.

As shown in Fig. 7, the adjusting tool 270 is linearly moved by the first distance from the first lateral side of the thread section to the second opposite lateral side of the thread section. The adjusting tool 270 passes the thread adjusting tool 270 without barrier. Due to the shape of the adjusting tool 270, the adjusting tool 270 can easily pick up the thread section 285.

In some embodiments, as shown in Fig. 8, a posture of the adjusting tool 270 may be adjusted to cause the adjusting tool 270 tilting up a bit away from the outer surface 292 after the movement of the first distance. For example, the posture of the adjusting tool 270 may be adjusted by rotating the adjusting tool 270, as shown by the rotation arrow shown in Fig. 8. In this way, the thread 285 can be held firmly on the adjusting tool 270 in order to avoid accidental separation from the adjusting tool 270.

In some embodiments, as shown in Fig. 9, the adjusting tool 270 is moved a second distance in a direction away from the outer surface 292 of the object with the adjusted posture. By the movement of the adjusting tool 270, a tensioning force is applied to the sewn threads 285 which in turn tighten the sewn stitches, in particular, the adjacent stitches that are adjacent to the position Q. Accordingly, the pitches of the adjacent stitches are adjusted properly. It is to be understood that in the shown example, the pulling direction is perpendicular to the outer surface 292 of the object. This is merely illustrative, the pulling direction or the tensioning direction may be any other proper directions as long as the thread 285 does not fall off the adjusting tool 270.

In some embodiments, a force sensor may be attached to the robotic arm 220 for sensing a force acting upon the adjusting tool 270. In response to the force being equal to a predetermined threshold, the pulling movement of the adjusting tool 270 is stopped. The predetermined threshold may be determined in association with a seam pattern of the sewn threads. The seam pattern may determine the appearance of the finishing seam and the tightness need of the joint. With the force sensor, it is ensured that a fixed force is acted upon the adjusting tool 270 and the appearance of the finishing seam is further improved. The predetermined threshold can be got from experiences or try-out tests.

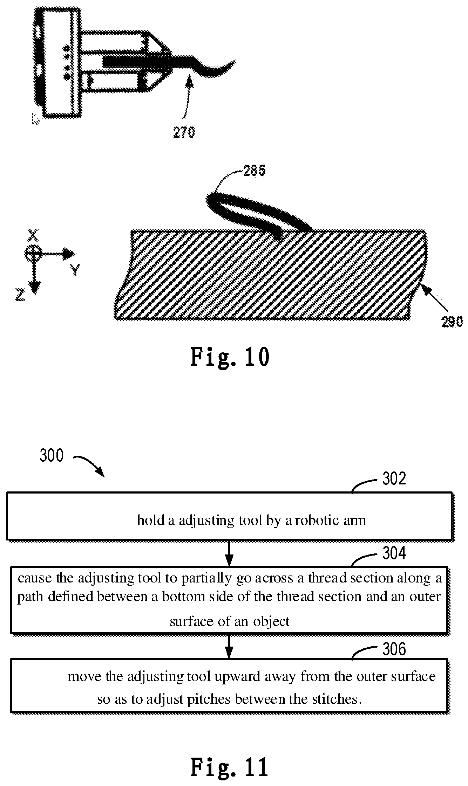

In some embodiments, as shown in Fig. 10, after the threads 285 are adjusted or tensioned by the adjusting tool 270, the adjusting tool 270 may retract from the threads 285, for example by rotating toward the outer surface 292 of the object. Then the adjusting tool 270 can be moved to an initial standby position and is prepared for another adjustment cycle. For the whole seam, a plural of tensioning operations are performed every several stitches, the whole joint sewing seam can thus be uniformly tightened to the required appearance of tension in automatic way.

In the shown example embodiments, the adjusting tool 270 comprises a pick-up head 272 which is shaped to pick up a thread. In some embodiments, the adjusting tool does not comprise a pick-up head. In this case, before the adjusting tool go through the thread, a posture of the adjusting tool may be adjusted such that a tip of the adjusting tool is tangent to the outer surface of the object. This means, when the adjusting tool 270 penetrates the object or passes through the thread section 285 from its bottom side, a direction of the tip of the adjusting tool 270 is always tangent to the outer surface of the object at the positon Q. With these measures, the orientation of the adjusting tool 270 can be precisely controlled and scratches caused by the adjusting tool 270 are reduced.

Fig. 11 is a flow chart of a method 300 for adjusting sewn threads according to one example embodiment of the present disclosure. As shown in Fig. 11, the method 300 comprises the following actions. At a block 302, an adjusting tool is firstly held by a robotic arm. At a block 304, the adjusting tool is caused to partially go across a thread section along a path defined between a bottom side of the thread section and an outer surface of an object. The sewn threads comprises a first end fixed to the object and a second end, a plural of stitches are formed across a sewing zone on the object between the first end and the second end, and each stitch comprises the thread section including a top side and the opposite bottom side. At a block 306, the adjusting tool is moved upward away from the outer surface so as to adjust pitches between the stitches. In this way, the pitches of the between the stitches can be adjusted in an easy way.

In some embodiments, the method may further comprise the following actions. An adjustment position which corresponds to a thread section of the stitches to be adjusted is determined by the controller. The adjusting tool is moved to a ready position at a first lateral side of the thread section which is offset from the position to be sewed by an offset distance. The adjusting tool is moved by a first distance from the first lateral side of the thread section to a second opposite lateral side of the thread section with the adjusting tool to cause tool to go across the thread section, the first distance being larger than the offset distance.

In some embodiments, the method may further comprise determining the adjustment position and the tangent angle that the line is tangent to the outer surface are determined based on the captured images captured by a camera.

In some embodiments, the method may further comprise depressing the adjusting tool in a direction perpendicular to the outer surface at the ready position toward the outer surface so as to deform the outer surface of the object, the depressing degree being determined based on a sensed contact force by a force sensor attached to the robotic arm.

In some embodiments, the method may further comprise adjusting the posture of the adjusting tool to hold the thread section at a curved portion after the adjusting tool partially going across the thread section, moving the adjusting tool upward away from the outer surface, with the thread section held at the curved portion, and top moving the adjusting tool in response to a force acting upon the adjusting tool being equal to a predetermined threshold, the predetermined threshold being determined in association with a seam pattern of the sewn threads.

In some embodiments, the object comprises a cover pre-wrapped around a steering wheel, the cover being made of leather, leatherette, a fabric and any other proper material with flexible and smooth outer surface.

## Claims

1. A robot for adjusting sewn threads (285), comprising
a robotic arm (230) configured to hold an adjusting tool (270) configured to adjust pitches of sewn stitches and comprising a pick-up head; and
a controller (210) configured to:
cause the adjusting tool (270) to partially go across a thread section along a path defined between a bottom side of the thread section and an outer surface (292) of an object (290), wherein the sewn threads (285) comprise a first end fixed to the object (290) and a second end, a plural of stitches are formed across a sewing zone on the object (290) between the first end and the second end, and each stitch comprises the thread section including a top side and the opposite bottom side, wherein the pick-up head is configured to pick up the thread section of the sewn stitches; and
move the adjusting tool (270) by the robotic arm upward away from the outer surface (292) so as to apply tensioning forces on the sewn stitches to thereby adjust the pitches between the stitches.

2. The robot according to claim 1, wherein the controller (210) is configured to:
determine an adjustment position which corresponds to a thread section of the stitches to be adjusted;
move the adjusting tool (270) to a ready position at a first lateral side of the thread section which is offset from the position (Q) to be tightened by an offset distance; and
move the adjusting tool (270) a first distance from the first lateral side of the thread section to a second opposite lateral side of the thread section to cause the adjusting tool (270) to go across the thread section, the first distance being larger than the offset distance.

3. The robot according to claim 2, further comprising a camera for capturing images of the object (290), wherein the adjustment position is determined based on the captured images.

4. The robot according to claim 2, wherein the controller (210) is configured to:
depress the adjusting tool (270) in a direction perpendicular to the outer surface (292) at the ready position toward the outer surface (292) so as to deform the outer surface (292) of the object (290).

5. The robot according to claim 4, wherein the controller (210) is configured to:
linearly move the adjusting tool (270) the first distance from the first lateral side of the thread section to the second opposite lateral side of the thread section, with the adjusting tool (270) being maintained at the depressed state,
the robot preferably further comprising a force sensor attached to the robotic arm (230) for sensing a contact force between the adjusting tool (270) and the object (290), wherein the depressing degree is determined based on the sensed contact force, the depressing degree being determined in association with a material of the object (290).

6. The robot according to any of claims 1-5, wherein the pick-up head (272) is adapted for penetrating the stitch and a curved portion adjacent to the pick-up head (272) for holding the thread.

7. The robot according to claim 6, wherein the controller (210) is configured to:
adjust the posture of the adjusting tool (270) to hold the thread section at the curved portion after the adjusting tool (270) partially going across the thread section;
move the adjusting tool (270) upward away from the outer surface (292) a second distance, with the thread section held at the curved portion; and
stop moving the adjusting tool (270) in response to meeting a requirement.

8. The robot according to claim 7, further comprising a force sensor attached to the robotic arm (230) for sensing a force acting upon the adjusting tool (270),
wherein the controller (210) is configured to stop moving the adjusting tool (270) in response to the force acting upon the adjusting tool (270) being equal to a predetermined threshold, the predetermined threshold being determined in association with a seam pattern of the sewn threads (285).

9. The robot according to any of claims 1-5 and 7-8, wherein the object (290) comprises a cover pre-wrapped around a steering wheel, the cover being made of leather, leatherette, or fabric.

10. A method for adjusting sewn threads (285), comprising
hold an adjusting tool (270) by a robotic arm (230), the adjusting tool being configured to adjust pitches of sewn stitches and comprising a pick-up head;
cause the adjusting tool (270) to partially go across a thread section along a path defined between a bottom side of the thread section and an outer surface (292) of an object (290), wherein the sewn threads (285) comprises a first end fixed to the object (290) and a second end, a plural of stitches are formed across a sewing zone on the object (290) between the first end and the second end, and each stitch comprises the thread section including a top side and the opposite bottom side, wherein the pick-up head is configured to pick up the thread section of the sewn stitches; and
move the adjusting tool (270) by the robotic arm upward away from the outer surface (292) so as to apply tensioning forces on the sewn stitches to thereby adjust the pitches between the stitches.

11. The method according to claim 10, further comprising
determining, by the controller (210), an adjustment position which corresponds to a thread section of the stitches to be adjusted;
moving, by the controller (210), the adjusting tool (270) to a ready position at a first lateral side of the thread section which is offset from the position (Q) to be tightened by an offset distance; and
moving, by the controller (210), the adjusting tool (270) a first distance from the first lateral side of the thread section to a second opposite lateral side of the thread section to cause the adjusting tool (270) to go across the thread section, the first distance being larger than the offset distance.

12. The method according to claim 11, further comprising determining the adjustment position and the tangent angle that the line is tangent to the outer surface (292) are determined based on captured images captured by a camera.

13. The method according to claim 11, further comprising depressing the adjusting tool (270) in a direction perpendicular to the outer surface (292) at the ready position toward the outer surface (292) so as to deform the outer surface (292) of the object (290), the depressing degree being determined based on a sensed contact force by a force sensor attached to the robotic arm (230).

14. The method according to claim 11, further comprising:
adjusting the posture of the adjusting tool (270) to hold the thread section at a curved portion after the adjusting tool (270) partially going across the thread section;
moving the adjusting tool (270) upward away from the outer surface (292), with the thread section held at the curved portion; and
stop moving the adjusting tool (270) in response to a force acting upon the adjusting tool (270) being equal to a predetermined threshold, the predetermined threshold being determined in association with a seam pattern of the sewn threads (285).

15. The method according to any of claims 10-14, wherein the object (290) comprises a cover pre-wrapped around a steering wheel, the cover being made of leather, leatherette, or fabric.

## Patentansprüche

1. Roboter zum Einstellen genähter Fäden (285), umfassend
einen Roboterarm (230), der dazu ausgelegt ist, ein Einstellwerkzeug (270) zu halten, das dazu ausgelegt ist, Abstände von genähten Stichen einzustellen, und der einen Aufnahmekopf umfasst; und
eine Steuerung (210), die zu Folgendem ausgelegt ist:
Bewirken, dass das Einstellwerkzeug (270) teilweise über einen Fadenabschnitt entlang eines Wegs verläuft, der zwischen einer Unterseite des Fadenabschnitts und einer Außenfläche (292) eines Objekts (290) definiert ist, wobei der genähten Faden (285) ein erstes Ende, das am Objekt (290) befestigt ist, und ein zweites Ende umfasst, wobei mehrere Stiche über einen Nähbereich am Objekt (290) zwischen dem ersten Ende und dem zweiten Ende gebildet werden und jeder Stich den Fadenabschnitt einschließlich einer Oberseite und der gegenüberliegenden Unterseite umfasst, wobei der Aufnahmekopf dazu ausgelegt ist, den Fadenabschnitt der genähten Stiche aufzunehmen; und
Bewegen des Einstellwerkzeugs (270) durch den Roboterarm nach oben weg von der Außenfläche (292), um Spannkräfte auf die genähten Stiche aufzubringen, um dadurch die Abstände zwischen den Stichen einzustellen.

2. Roboter nach Anspruch 1, wobei die Steuerung (210) zu Folgendem ausgelegt ist:
Bestimmen einer Einstellposition, die einem Fadenabschnitt der einzustellenden Stiche entspricht;
Bewegen des Einstellwerkzeugs (270) in eine Bereitschaftsposition an einer ersten lateralen Seite des Fadenabschnitts, die um einen Versatz von der Position (Q), die angezogen werden soll, versetzt ist; und
Bewegen des Einstellwerkzeugs (270) um eine erste Entfernung von der ersten lateralen Seite des Fadenabschnitts zu einer zweiten gegenüberliegenden lateralen Seite des Fadenabschnitts, um zu bewirken, dass das Einstellwerkzeug (270) über den Fadenabschnitt verläuft, wobei die erste Entfernung größer als der Versatz ist.

3. Roboter nach Anspruch 2, der ferner eine Kamera zum Aufnehmen von Bildern des Objekts (290) umfasst, wobei die Einstellposition basierend auf den aufgenommenen Bildern bestimmt wird.

4. Roboter nach Anspruch 2, wobei die Steuerung (210) zu Folgendem ausgelegt ist:
Niederdrücken des Einstellwerkzeugs (270) in eine Richtung senkrecht zur Außenfläche (292) in der Bereitschaftsposition zur Außenfläche (292) hin, um die Außenfläche (292) des Objekts (290) zu verformen.

5. Roboter nach Anspruch 4, wobei die Steuerung (210) zu Folgendem ausgelegt ist:
linearem Bewegen des Einstellwerkzeugs (270) um die erste Entfernung von der ersten lateralen Seite des Fadenabschnitts zur zweiten gegenüberliegenden lateralen Seite des Fadenabschnitts, wobei das Einstellwerkzeug (270) im niedergedrückten Zustand gehalten wird,
wobei der Roboter vorzugsweise ferner einen Kraftsensor umfasst, der am Roboterarm (230) angebracht ist, um eine Kontaktkraft zwischen dem Einstellwerkzeug (270) und dem Objekt (290) zu erfassen, wobei der Niederdrückgrad basierend auf der erfassten Kontaktkraft bestimmt wird, wobei der Niederdrückgrad in Verbindung mit einem Material des Objekts (290) bestimmt wird.

6. Roboter nach einem der Ansprüche 1-5, wobei der Aufnahmekopf (272) dazu eingerichtet ist, den Stich und einen gekrümmten Abschnitt neben dem Aufnahmekopf (272) zum Halten des Fadens zu durchdringen.

7. Roboter nach Anspruch 6, wobei die Steuerung (210) zu Folgendem ausgelegt ist:
Einstellen der Haltung des Einstellwerkzeugs (270), um den Fadenabschnitt am gekrümmten Abschnitt zu halten, nachdem das Einstellwerkzeug (270) teilweise über den Fadenabschnitt verläuft;
Bewegen des Einstellwerkzeugs (270) um eine zweite Entfernung von der Außenfläche (292) nach oben, wobei der Fadenabschnitt am gekrümmten Abschnitt gehalten wird; und
Stoppen der Bewegung des Einstellwerkzeugs (270) bei Erfüllung einer Anforderung.

8. Roboter nach Anspruch 7, der ferner einen Kraftsensor umfasst, der am Roboterarm (230) angebracht ist, um eine Kraft zu erfassen, die auf das Einstellwerkzeug (270) wirkt,
wobei die Steuerung (210) dazu ausgelegt ist, als Reaktion darauf, dass die auf das Einstellwerkzeug (270) wirkende Kraft gleich einem festgelegten Schwellenwert ist, das Bewegen des Einstellwerkzeugs (270) zu stoppen, wobei der festgelegte Schwellenwert in Verbindung mit einem Nahtmuster der genähten Fäden (285) bestimmt wird.

9. Roboter nach einem der Ansprüche 1-5 und 7-8, wobei das Objekt (290) einen Überzug umfasst, der um ein Lenkrad vorgewickelt ist, wobei der Überzug aus Leder, Kunstleder oder Stoff hergestellt ist.

10. Verfahren zum Einstellen genähter Fäden (285), umfassend
Halten eines Einstellwerkzeugs (270) durch einen Roboterarm (230), wobei das Einstellwerkzeug dazu ausgelegt ist, Abstände von genähten Stichen einzustellen, und einen Aufnahmekopf umfasst;
Bewirken, dass das Einstellwerkzeug (270) teilweise über einen Fadenabschnitt entlang eines Wegs verläuft, der zwischen einer Unterseite des Fadenabschnitts und einer Außenfläche (292) eines Objekts (290) definiert ist, wobei der genähte Faden (285) ein erstes Ende, das am Objekt (290) befestigt ist, und ein zweites Ende umfasst, wobei mehrere Stiche über einen Nähbereich am Objekt (290) zwischen dem ersten Ende und dem zweiten Ende gebildet werden, und jeder Stich den Fadenabschnitt einschließlich einer Oberseite und der gegenüberliegenden Unterseite umfasst, wobei der Aufnahmekopf dazu ausgelegt ist, den Fadenabschnitt der genähten Stiche aufzunehmen; und
Bewegen des Einstellwerkzeugs (270) durch den Roboterarm nach oben weg von der Außenfläche (292), um Spannkräfte auf die genähten Stiche aufzubringen, um dadurch die Abstände zwischen den Stichen einzustellen.

11. Verfahren nach Anspruch 10, ferner umfassend Bestimmen einer Einstellposition, die einem Fadenabschnitt der einzustellenden Stiche entspricht, mittels der Steuerung (210);
Bewegen des Einstellwerkzeugs (270) mittels der Steuerung (210) in eine Bereitschaftsposition an einer ersten lateralen Seite des Fadenabschnitts, die um einen Versatz von der Position (Q), die angezogen werden soll, versetzt ist; und
Bewegen des Einstellwerkzeugs (270) mittels der Steuerung (210) um eine erste Entfernung von der ersten lateralen Seite des Fadenabschnitts zu einer zweiten gegenüberliegenden lateralen Seite des Fadenabschnitts, um zu bewirken, dass das Einstellwerkzeug (270) über den Fadenabschnitt verläuft, wobei die erste Entfernung größer als der Versatz ist.

12. Verfahren nach Anspruch 11, ferner umfassend Bestimmen der Einstellposition und des Tangentenwinkels, in dem die Linie tangential zur Außenfläche (292) ist, basierend auf aufgenommenen Bildern, die durch eine Kamera aufgenommen werden, bestimmt werden.

13. Verfahren nach Anspruch 11, ferner umfassend Niederdrücken des Einstellwerkzeugs (270) in eine Richtung senkrecht zur Außenfläche (292) in der Bereitschaftsposition zur Außenfläche (292) hin, um die Außenfläche (292) des Objekts (290) zu verformen, wobei der Niederdrückgrad basierend auf einer durch einen am Roboterarm (230) angebrachten Kraftsensor erfassten Kontaktkraft bestimmt wird.

14. Verfahren nach Anspruch 11, ferner umfassend:
Einstellen der Haltung des Einstellwerkzeugs (270), um den Fadenabschnitt an einem gekrümmten Abschnitt zu halten, nachdem das Einstellwerkzeug (270) teilweise über den Fadenabschnitt verläuft;
Bewegen des Einstellwerkzeugs (270) von der Außenfläche (292) nach oben, wobei der Fadenabschnitt am gekrümmten Abschnitt gehalten wird; und
als Reaktion darauf, dass die auf das Einstellwerkzeug (270) wirkende Kraft gleich einem festgelegten Schwellenwert ist, Stoppen des Bewegens des Einstellwerkzeugs (270), wobei der festgelegte Schwellenwert in Verbindung mit einem Nahtmuster der genähten Fäden (285) bestimmt wird.

15. Verfahren nach einem der Ansprüche 10-14, wobei das Objekt (290) einen Überzug umfasst, der um ein Lenkrad vorgewickelt ist, wobei der Überzug aus Leder, Kunstleder oder Stoff hergestellt ist.

## Revendications

1. Robot pour ajuster des fils cousus (285), comprenant un bras robotique (230) configuré pour prendre un outil d'ajustement (270) configuré pour ajuster des écartements de points cousus et comprenant une tête de prise ; et
une unité de commande (210) configurée pour :
amener l'outil d'ajustement (270) à aller partiellement à travers une section de fil le long d'un trajet défini entre un côté inférieur de la section de fil et une surface extérieure (292) d'un objet (290), dans lequel les fils cousus (285) comprennent une première extrémité fixée à l'objet (290) et une seconde extrémité, une pluralité de points sont formés à travers une zone de couture sur l'objet (290) entre la première extrémité et la seconde extrémité, et chaque point comprend la section de fil incluant un côté supérieur et le côté inférieur opposé, dans lequel la tête de prise est configurée pour prendre la section de fil des points cousus ; et
déplacer l'outil d'ajustement (270), par le bras robotique, vers le haut en éloignement de la surface extérieure (292) afin d'appliquer des forces de mise en tension sur les points cousus pour ajuster ainsi les écartements entre les points.

2. Robot selon la revendication 1, dans lequel l'unité de commande (210) est configurée pour :
déterminer une position d'ajustement qui correspond à une section de fil des points destinés à être ajustés ;
déplacer l'outil d'ajustement (270) jusqu'à une position prête sur un premier côté latéral de la section de fil qui est décalée relativement à la position (Q) pour être serrée selon une distance de décalage ; et
déplacer l'outil d'ajustement (270) sur une première distance depuis le premier côté latéral de la section de fil jusqu'à un second côté latéral opposé de la section de fil pour amener l'outil d'ajustement (270) à aller à travers la section de fil, la première distance étant plus grande que la distance de décalage.

3. Robot selon la revendication 2, comprenant en outre une caméra pour capturer des images de l'objet (290), dans lequel la position d'ajustement est déterminée sur la base des images capturées.

4. Robot selon la revendication 2, dans lequel l'unité de commande (210) est configurée pour :
abaisser l'outil d'ajustement (270) dans une direction perpendiculaire à la surface extérieure (292) jusqu'à la position prête vers la surface extérieure (292) afin de déformer la surface extérieure (292) de l'objet (290).

5. Robot selon la revendication 4, dans lequel l'unité de commande (210) est configurée pour :
déplacer linéairement l'outil d'ajustement (270) sur la première distance depuis le premier côté latéral de la section de fil jusqu'au second côté latéral opposé de la section de fil, avec l'outil d'ajustement (270) maintenu dans l'état abaissé,
le robot comprenant de préférence en outre un capteur de force attaché au bras robotique (230) pour détecter une force de contact entre l'outil d'ajustement (270) et l'objet (290), dans lequel le degré d'abaissement est déterminé sur la base de la force de contact détectée, le degré d'abaissement étant déterminé en association avec un matériau de l'objet (290).

6. Robot selon de quelconques des revendications 1 à 5, dans lequel la tête de prise (272) est adaptée pour pénétrer dans le point et une partie courbée adjacente à la tête de prise (272) pour retenir le fil.

7. Robot selon la revendication 6, dans lequel l'unité de commande (210) est configurée pour :
ajuster l'orientation de l'outil d'ajustement (270) pour retenir la section de fil au niveau de la partie courbée après que l'outil d'ajustement (270) va partiellement à travers la section de fil ;
déplacer l'outil d'ajustement (270) vers le haut en éloignement de la surface extérieure (292) sur une seconde distance, avec la section de fil retenue au niveau de la partie courbée ; et
arrêter de déplacer l'outil d'ajustement (270) en réponse au respect d'une condition.

8. Robot selon la revendication 7, comprenant en outre un capteur de force attaché au bras robotique (230) pour détecter une force agissant sur l'outil d'ajustement (270),
dans lequel l'unité de commande (210) est configurée pour arrêter de déplacer l'outil d'ajustement (270) en réponse au fait que la force agissant sur l'outil d'ajustement (270) est égale à un seuil prédéterminé, le seuil prédéterminé étant déterminé en association avec un patron de couture des fils cousus (285).

9. Robot selon de quelconques des revendications 1 à 5 et 7 et 8, dans lequel l'objet (290) comprend une couverture préenveloppant un volant de direction, la couverture étant faite de cuir, de similicuir, ou de tissu.

10. Procédé pour ajuster des fils cousus (285), comprenant les actions suivantes
tenir un outil d'ajustement (270) par le biais d'un bras robotique (230), l'outil d'ajustement étant configuré pour ajuster des écartements de points cousus et comprenant une tête de prise ;
amener l'outil d'ajustement (270) à aller partiellement à travers une section de fil le long d'un trajet défini entre un côté inférieur de la section de fil et une surface extérieure (292) d'un objet (290), dans lequel les fils cousus (285) comprennent une première extrémité fixée à l'objet (290) et une seconde extrémité, une pluralité de points sont formés à travers une zone de couture sur l'objet (290) entre la première extrémité et la seconde extrémité, et chaque point comprend la section de fil incluant un côté supérieur et le côté inférieur opposé, dans lequel la tête de prise est configurée pour prendre la section de fil des points cousus ; et
déplacer l'outil d'ajustement (270), par le bras robotique, vers le haut en éloignement de la surface extérieure (292) afin d'appliquer des forces de mise en tension sur les points cousus pour ajuster ainsi les écartements entre les points.

11. Procédé selon la revendication 10, comprenant en outre les actions suivantes
déterminer, par le biais de l'unité de commande (210), une position d'ajustement qui correspond à une section de fil des points destinés à être ajustés ;
déplacer, par le biais de l'unité de commande (210), l'outil d'ajustement (270) jusqu'à une position prête sur un premier côté latéral de la section de fil qui est décalée de la position (Q) pour être serrée selon une distance de décalage ; et
déplacer, par le biais de l'unité de commande (210), l'outil d'ajustement (270) sur une première distance depuis le premier côté latéral de la section de fil jusqu'à un second côté latéral opposé de la section de fil pour amener l'outil d'ajustement (270) à aller à travers la section de fil, la première distance étant plus grande que la distance de décalage.

12. Procédé selon la revendication 11, comprenant en outre l'action consistant à déterminer la position d'ajustement et l'angle tangent selon lequel la ligne est tangente à la surface extérieure (292) sont déterminés sur la base d'images capturées, capturées par une caméra.

13. Procédé selon la revendication 11, comprenant en outre l'action consistant à abaisser l'outil d'ajustement (270) dans une direction perpendiculaire à la surface extérieure (292) jusqu'à la position prête vers la surface extérieure (292) afin de déformer la surface extérieure (292) de l'objet (290), le degré d'abaissement étant déterminé sur la base d'une force de contact détectée, par une capteur de force attaché au bras robotique (230).

14. Procédé selon la revendication 11, comprenant en outre les actions suivantes :
ajuster l'orientation de l'outil d'ajustement (270) pour retenir la section de fil au niveau d'une partie courbée après que l'outil d'ajustement (270) va partiellement à travers la section de fil ;
déplacer l'outil d'ajustement (270) vers le haut en éloignement de la surface extérieure (292), avec la section de fil retenue au niveau de la partie courbée ; et
arrêter de déplacer l'outil d'ajustement (270) en réponse au fait qu'une force agissant sur l'outil d'ajustement (270) est égale à un seuil prédéterminé, le seuil prédéterminé étant déterminé en association avec un patron de couture des fils cousus (285).

15. Procédé selon de quelconques des revendications 10 à 14, dans lequel l'objet (290) comprend une couverture préenveloppant un volant de direction, la couverture étant faite de cuir, de similicuir, ou de tissu.
